# NEUE EUROPÄISCHE PATENTSCHRIFT

(11) **EP 2 081 135 B2**
(45) Veröffentlichungstag und Bekanntmachung des Hinweises auf die Entscheidung über den Einspruch: **29.11.2017**
(45) Hinweis auf die Patenterteilung: 18.12.2013
(21) Anmeldenummer: 09005069.1
(22) Anmeldetag: 13.04.2004
(51) Int. Cl.: G06K 7/10, G06K 7/00, G06K 19/14, G06K 19/073, H04L 9/32

(54) **Kontaktloser Datenträger**
Contactless data carrier
Support de données sans contact

(30) Priorität: 14.04.2003 DE 10317257
(43) Veröffentlichungstag der Anmeldung: 22.07.2009
(62) Teilanmeldung aus: 04727008.7
(73) Patentinhaber: Giesecke & Devrient GmbH, 81677 München (DE)
(72) Erfinder: Graf, Hans, 6850 Dornbirn (AT); Finkenzeller, Klaus, 85774 Unterföhring (DE); Rossmadl, Alfred, 87737 Boos (DE)
(74) Vertreter: Klunker IP Patentanwälte PartG mbB

(56) Entgegenhaltungen:
- FR-A- 2 770 316
- US-A- 5 347 110
- US-A- 5 789 733
- US-A- 5 825 045
- US-A1- 2003 052 159
- US-A1- 2003 057 276
- T.A.F. KINNEGING: 'Technical Report, PKI for Machine Readable Travel Documents offering ICC read-only access, date: 02-04-2004' ICAO - NTWG, TASK FORCE PKI & SECURITY

## Beschreibung

Die vorliegende Erfindung betrifft eine Vorrichtung sowie ein Verfahren zur sicheren Feststellung der willentlichen Benutzung eines kontaktlosen Datenträgers.

Unter dem im Folgenden verwendeten Begriff "kontaktloser Datenträger" bzw. "Kontaktloskarte" werden alle Anordnungen verstanden, welche einen Mikrochip und eine mit diesem verbundene Antenne aufweisen und mit einem geeigneten Lesegerät Daten austauschen können. Hierzu zählen neben Chipkarten für Zahlungsanwendungen auch kontaktlos lesbare Identifikationsdokumente, wie Reisepässe und Personalausweise mit eingebautem Mikrochip sowie ferner RFID-Etiketten.

Kontaktlose Datenträger werden im Zahlungsverkehr heutzutage ausschließlich in geschlossenen Anwendungen, wie etwa zum Bezahlen in der Kantine, oder in öffentlichen Verkehrsmitteln eingesetzt. Der Grund hierfür ist, dass kontaktlose Karten aus Sicherheitsgründen in Deutschland bisher nicht für Zahlungsanwendungen wie z. B. als Geldkarte zugelassen sind. Ausschlaggebend hierfür ist die Befürchtung, dass vom Karteninhaber unbemerkt Dritte eine Geldkarte kontaktlos entladen könnten. Es wäre beispielsweise denkbar, dass mithilfe eines mobilen Terminals für kontaktlose Karten, welches durch Menschenansammlungen (z. B. Messen, Konzerte, U-Bahn, Bahnhof...) bewegt wird, unbemerkt "elektronisches" Geld aus den sich in der Nähe befindlichen Brieftaschen abgebucht werden kann. Bei kontaktbehafteten Karten tritt ein derartiges Problem nicht auf, da ein Zahlungsvorgang von dem Karteninhaber durch Einstecken der Karte in den Kartenleser erfolgt.

Neben der Verwendung als Zahlungsmittel können Kontaktloskarten auch als Datenträger in Wertdokumenten, wie z. B. Reisepässen eingesetzt werden. Insbesondere bietet es sich an, kontaktlose Karten als Visa zu verwenden, die in das Reisedokument aufgenommen, beispielsweise aufgeklebt, werden können. Hierzu eignet sich z.B. das Coil-on-Chip-Verfahren (CoC), bei dem die Antenne auf dem Chip angeordnet ist. Es können aber auch herkömmliche Kontaktlosanordnungen verwendet werden, wie z. B. Folien mit darauf angeordnetem Chip und einer auf der Folie aufgedruckten Spule.

Auch bei der Verwendung von Kontaktloskarten in Wertdokumenten stellt sich das Problem, dass ein unbeabsichtiges Lesen durch Dritte verhindert werden soll. Gleiches gilt für das unberechtigte und unbemerkte Auslesen von Kontaktlostranspondern die zur Produktkennzeichnung eingesetzt werden.

Ein in der FR 2 770 316 A1 beschriebener Datenträger umfasst ein lichtempfindliches Element, beispielsweise einen Photodetektor. Der Datenträger ist erst dann betriebsbereit, beispielsweise für eine antennenbasierte, kontaktlose Datenübertragung mit einem Lesegerät, wenn das lichtempfindliche Element einen Lichteinfall detektiert. Ein solcher Lichteinfall kann beispielsweise dadurch erfolgen, dass der Benutzer des Datenträgers denselben zum Zeichen der willentlichen Benutzung aus einer Tasche oder dergleichen herausholt. Weiterhin kann es vorgesehen sein, dass das lichtempfindliche Element einen von einem Lesegerät ausgesendeten Lichtstrahl detektiert und der Datenträger erst daraufhin in einen betriebsbereiten Modus versetzt wird.

Die US 2003/0057276 A1 beschreibt ein Verfahren zur automatisierten Erkennung der Korrektheit der Identität eines Gegenstandes, welcher eine erste maschinell lesbare Kennzeichnung, beispielsweise einen Barcode, und eine zweite, kontaktlos maschinell auslesbare Kennzeichnung umfasst. Zur identitätsprüfung werden die beiden Kennzeichnungen ausgelesen und miteinander verglichen.

Aufgabe der vorliegenden Erfindung ist daher die Bereitstellung einer Vorrichtung sowie eines Verfahrens zur sicheren Feststellung der willentlichen Benutzung eines kontaktlosen Datenträgers durch den Karteninhaber.

Die Aufgabe wird durch die Merkmale der unabhängigen Ansprüche gelöst. In davon abhängigen Ansprüchen sind vorteilhafte Ausgestaltungen und Weiterbildungen der Erfindung angegeben.

Mithilfe des zusätzlichen Datenübertragungskanals werden auf optischem Weg Daten zwischen Lesegerät und Datenträger ausgetauscht, die geeignet sind, eine Authentifizierung zwischen Lesegerät und Kontaktloskarte durchzuführen. Die Authentifizierung über den zusätzlichen Datenübertragungskanal verhindert ein unbeabsichtigtes Betätigen der Kontaktloskarte, da die optische Information nicht mehr zur Verfügung steht, wenn der Datenträger für das Lesegerät optisch nicht mehr sichtbar ist, also z. B. in einer Tasche/Geldbörse getragen wird.

Nach einer ersten Ausführungsform der Erfindung weist der Datenträger optisch lesbare Informationen auf, wie z. B. einen Strich- oder Matrixcode. Wird die Karte dem Lesegerät präsentiert, so wird diese Information mittels einer optischen Lesevorrichtung, z. B. einem Barcodescanner gelesen und ausgewertet. Die optisch gelesene Information kann anschließend von dem kontaktlosen Datenträger zur Authentifizierung mit dem kontaktlosen Lesegerät verwendet werden, um so die Berechtigung für eine anschließende Transaktion vorzuweisen.

Eine Erweiterung dieser ersten Ausgestaltung besteht darin, die optisch angezeigte Information durch den Chip auf eine Anzeigevorrichtung, z. B. einem LCD-Display auszugeben. Auf diese Weise ist ein einfaches Kopieren der Informationen nicht mehr möglich, da die Informationen auch zufällig generierte Datenstrukturen enthalten können.

Nach einer weiteren Ausgestaltung der Erfindung ist der kontaktlose Datenträger mit einem optischen Leuchtmittel ausgestattet, z. B. einer IR-Leuchtdiode oder einer Leuchtfolie. Dabei kann das Leuchtmittel über eine elektrische Verbindung mit dem Chip verfügen oder integraler Bestandteil des Chips sein. Sobald ein kontaktloses Lesegerät eine Transaktion mit dem Datenträger beabsichtigt, wird das Leuchtmittel verwendet, um zusätzlichen Daten vom Chip auf optischem Wege an das Lesegerät zu senden. Diese Daten können Bestandteil einer gegenseitigen Authentifizierung sein und werden erfindungsgemäß dazu verwendet, eine nachfolgende Transaktion freizugeben. Ohne Kenntnis der optisch übertragenen Daten im Lesegerät kann eine Transaktion mit dem Datenträger nicht durchgeführt werden.

Zusätzlich lassen sich auf dem Datenträger Veränderungen der Umgebungsbedingungen detektieren, sobald diese für einen Bezahlvorgang aus der Tasche genommen wird. So kann beispielsweise mittels eines lichtempfindlichen optischen Bauteils (14) festgestellt werden, ob sich die Karte in einer Tasche oder ausserhalb befindet. Das lichtempfindliche Bauteil kann dabei über eine elektrische Verbindung mit dem Chip verfügen oder integraler Bestandteil des Chips sein. Sobald das lichtempfindliche Bauteil einer Mindesthelligkeit ausgesetzt ist, wird ein Freigabesignal erzeugt, welches eine Transaktion des Chips mit dem kontaktlosen Lesegerät ermöglicht.

Eine Weiterbildung dieser Idee besteht darin, durch das Lesegerät selbst ein optisches Signal zu erzeugen. Zur Freigabe einer Transaktion mit dem Chip ist es denkbar, das optische Signal mit einer markanten Modulation, z. B. einem 1 kHz Signal zu versehen oder mittels des optischen Signals Daten an den Chip zu übertragen, welche zur Authentisierung zwischen Datenträger und Lesegerät verwendet werden.

Eine Kombination der vorgenannten Ausführungsformen besteht darin, auf der Karte sowohl ein optisches Leuchtmittel als auch ein optisches Empfangsmittel zur Verfügung zu stellen und mit dem Chip zu verbinden oder diese Mittel als integralen Bestandteil des Chips bereitzustellen. In diesem Falle wäre neben einer kontaktlosen bidirektionalen Datenübertragung zusätzlich eine bidirektionale optische Datenübertragung zwischen der Karte und einem Lesegerät durchführbar. Erfindungsgemäß ist dabei vorgesehen, zwischen den unterschiedlichen Übertragungskanälen zu wechseln, wobei vorzugsweise jeder Übertragungskanal zumindest einmal für die Übertragung von Daten verwendet werden kann.

Ein weiterer Vorteil dieser Anordnung besteht darin, dass die Energie zum Betrieb der optischen Kommunikationsmittel aus dem kontaktlosen Übertragungskanal (z. B. magnetische oder kapazitive Kopplung) gewonnen wird. Es versteht sich darüber hinaus von selbst, dass für die optische Kommunikation neben sichtbarem Licht auch IR, UV oder eine Mischung (uplink vs. downlink) aus diesen Bereichen verwendet werden kann.

Analog zu optischer Information könnten zusätzlich auch akustische Informationen verwendet werden, z. B. in Form der Übertragung eines codierten akustischen Signals, welches z. B. mit einem in der Karte integrierten Lautsprecher (z. B. Piezolautsprecher) erzeugt werden kann.

Weiterhin ist ein in der Karte befindlicher Lautsprecher auch dazu geeignet, um jede Zahlungstransaktion mit einem Signal zu quittieren, welches dem Karteninhaber signalisiert, dass momentan ein Zahlungsvorgang auf seiner Karte stattfindet. In dieser Ausgestaltung der Erfindung wäre es zwar immer noch möglich, unerlaubt Geld mit einem mobilen kontaktlosen Terminal von der Karte zu buchen, jedoch bliebe eine Transaktion nicht unbemerkt.

Anstelle eines Lautsprechers kann alternativ oder zusätzlich auch vorgesehen sein, den Datenträger mit einem Vibrationsalarm zu versehen.

Die Erfindung wird im folgenden anhand der in der Zeichnung dargestellten Ausführungsbeispiele näher erläutert.

### Es zeigen:

- Fig.: 1 eine Ausführungsform der vorliegenden Erfindung, wobei auf dem Datenträger eine optische Information aufgebracht ist,
- Fig. 2: eine weitere Ausführungsform der Erfindung mit einem auf dem Datenträger angeordneten Leuchtmittel,
- Fig. 3: eine weitere Ausführungsform der Erfindung mit einem auf dem Datenträger angeordneten optischen Empfangsmittel,
- Fig. 4: eine weitere Ausführungsform der Erfindung mit einem auf dem Datenträger angeordneten optischen Bauteil,
- Fig. 5: ein Ausführungsbeispiel eines Verfahrens zur Ableitung eines kryptografischen Schlüssels, und
- Fig. 6: ein Ausführungsbeispiel eines Authentifizierungsverfahrens.

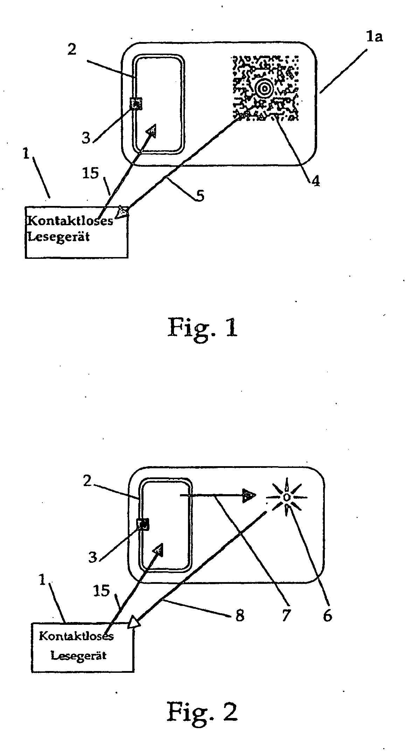

Fig. 1 zeigt einen kontaktlosen Datenträger 1a, mit einer auf diesem angeordneten Antenne 2 und einem mit diesem elektrisch leitend verbundenen Chip 3. Ein Bereich des Datenträgers weist optische Informationen 4, beispielsweise einen Barcode oder auch einen Matrixcode auf, welche geeignet sind, über einen optischen Datenübertragungskanal 5 an das Lesegerät 1 übertragen zu werden. Der optische Datenübertragungskanal 5 wird zusätzlich zu dem antennenbasierten kontaktlosen Datenübertragungskanal 15 bereitgestellt.

In Fig. 2 wird ein kontaktloser Datenträger beschrieben, auf dem ein optisches Leuchtmittel 6 angeordnet ist. Das Leuchtmittel 6, welches als LED, OLED oder auch als Infrarot-Leuchtdiode (IR-LED) ausgestaltet werden kann, ist, wie durch den Pfeil 7 angedeutet, mit dem Chip 3 elektrisch leitend verbunden und wird durch diesen angesteuert. Auch hier erfolgt eine optische Datenübertragung über den Datenübertragungskanal 8.

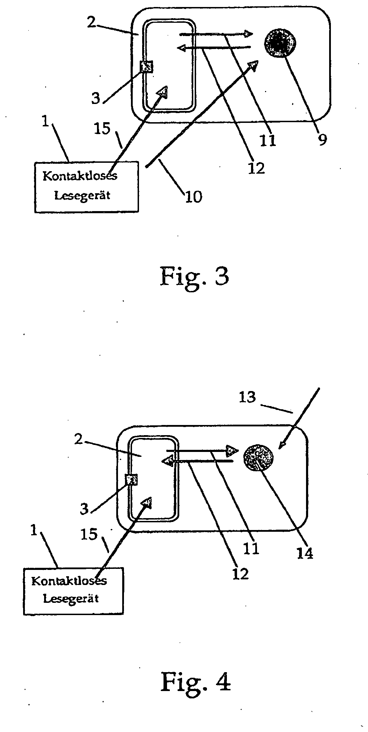

Eine weitere Ausführungsform ist in Fig. 3 dargestellt, bei dem auf dem Datenträger 1a ein optisches Empfangsmittel 9 angeordnet ist, welches mit dem Chip 3 elektrisch leitend verbunden ist und eine bidirektionale optische Datenübertragung zwischen Lesegerät 1 und Datenträger 1a ermöglicht. Dabei kann der Chip 3 die Steuerung der Datenübertragung sowohl für die kontaktlose 15 als auch für die optische Datenübertragung 10 übernehmen. Beide Übertragungskanäle können im Wechsel oder auch gleichzeitig betrieben werden. Ferner können die Übertragungskanäle gleichberechtigt oder hierarchisch (Master-Slave) betrieben werden.

Mithilfe des in Fig. 4 dargestellten optischen Bauteils 14, welches eine elektrisch leitende Verbindung 11 mit dem Chip 3 aufweist, kann bei ausreichendem Lichteinfall 13 die Datenübertragung über die antennenbasierte kontaktlose Schnittstelle freigegeben werden (durch den Pfeil 12 angedeutet).

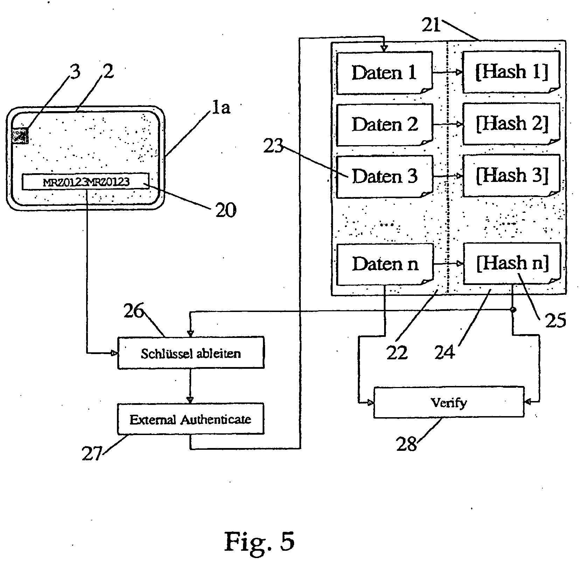

Das Verfahren zur Freigabe von im Datenträger 1a gespeicherten geheimen Informationen kann beispielsweise folgendermaßen ablaufen. Wie in Fig. 5 dargestellt, weist der Speicher 21 des Chips 3 mehrere Speicherbereiche 24 bzw. 22 auf, welche teilweise frei auslesbar sind und deren Inhalte teilweise mit Hilfe geeigneter Schlüssel gegen ein unberechtigtes Auslesen abgesichert sind. Der abgesicherte Speicherbereich 22 enthält mindestens einen Datensatz 23, der aus geheimzuhaltenen Informationen, wie z.B. Biometriedaten, PIN etc. besteht. Der frei auslesbare Speicherbereich 24 enthält mindestens einen Datensatz 25, der dem jeweiligen Datensatz 23 eindeutig zugeordnet ist und einen Komprimierungswert, z.B. einen CRC, Hash, eine kryptografische Prüfsumme etc. darstellt. Ein Rückschluß von dem Inhalt des frei auslesbaren Datensatzes 25 auf den Inhalt des geheimen Datensatzes 23 ist ausgeschlossen.

Zum Auslesen eines der Datensätze 23 ist erfindungsgemäß vorgesehen, in einem ersten Verfahrensschritt den diesem zugeordneten Datensatz 25 über den antennenbasierten Datenübertragungskanal 15 sowie die optisch lesbaren Informationen 20, z.B. ein Barcode oder eine MRZ (machine readable zone), des Datenträgers 1a mit Hilfe des Lesegerätes 1 auszulesen.

In einem zweiten Verfahrensschritt wird aus dem Datensatz 25 und den optisch lesbaren Informationen 20 ein kryptografischer Schlüssel 26 abgeleitet. Hierzu können beliebige Schlüsselableitungsverfahren eingesetzt werden, die aus dem Stand der Technik hinlänglich bekannt sind, wie z.B. Schlüsselableitung unter Verwendung eines Masterschlüssels, etc. Der für den Datenträger individuelle kryptografische Schlüssel, der aus dem geheimen Masterschlüssel abgeleitet ist, ist bereits auf dem Datenträger gespeichert. Der Masterschlüssel ist in dem Lesegerät abgelegt für die Ableitung des kryptografischen Schlüssels 26 mittels der optisch gelesenen Informationen 20 und dem kontaktlos gelesenen Datensatz 25.

Ein dritter Verfahrensschritt sieht vor, eine Authentifizierung 27 zwischen Lesegerät 1 und dem Chip 3 des Datenträgers 1a mittels des abgeleiteten kryptografischen Schlüssels durchzuführen. Hiermit wird überprüft, ob die jeweiligen dem Lesegerät 1 bekannten bzw. die im Datenträger 1a hinterlegten Schlüssel identisch sind. Ein bereits aus dem Stand der Technik bekanntes Authentifizierungsverfahren arbeitet nach dem "Challenge-Response-Prinzip", welches im Bereich der Chipkarten weite Verbreitung findet. Durch ein "GetChallenge"-Kommando erhält das Lesegerät 1 eine Zufallszahl von dem Chip 3, um sich anschließend durch die Daten eines "External Authenticate"-Kommando, die aus der Zufallszahl und dem Schlüssel abgeleitet sind, gegenüber dem Chip zu authentifizieren. Selbstverständlich können weitere Authentifizierungsschritte, beispielsweise zur gegenseitigen Authentifizierung, und andere Verfahren zur Authentifizierung verwendet werden.

In einem vereinfachten Verfahren soll sich das Lesegerät in dem dritten Verfahrensschritt lediglich als ein solches Authentifizieren, welches beide Datenübertragungskanäle benutzt, ohne dabei gleichzeitig die Kenntnis eines geheimen Schlüssels nachzuweisen. In dem zweiten Verfahrensschritt 26 wird dann beispielsweise ein Wert abgeleitet, der zwar als Schlüssel für den dritten Schritt 27 verwendet wird, aber nicht geheim bzw. aus einem Master-Schlüsel abgeleitet ist.

In einem optionalen letzten Verfahrensschritt wird aus dem ausgelesenen Datensatz 23 ein Komprimierungswert gebildet und dieser mit dem Inhalt des frei auslesbaren Datensatzes 25 verglichen (s. Fig. 5, Überprüfung 28).
Unterscheiden sich beide Komprimierungswerte, so ist davon auszugehen, dass der Datensatz 23 unbefugt verändert wurde. Nach erfolgreicher Authentifizierung kann der Datensatz 23 ausgelesen werden.

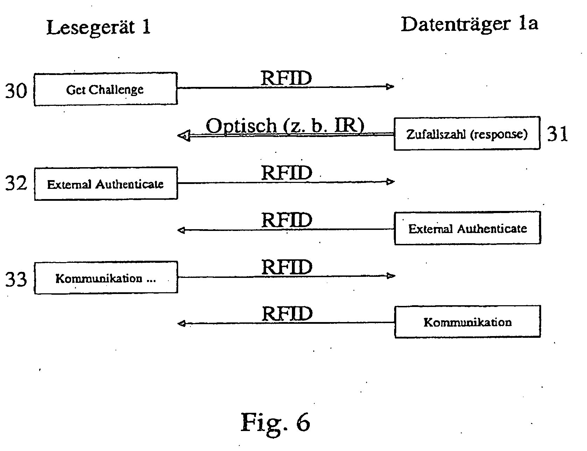

Das in Fig. 6 beschriebene Verfahren sieht ebenfalls vor zumindest auf einen Teil, der im Transponder gespeicherten Daten, den Zugriff nur nach erfolgreicher Authentisierung zu ermöglichen. Das Verfahren arbeitet auch nach dem "Challenge-Response-Prinzip".

In einem ersten Schritt 30 fordert das Lesegerät 1 eine Zufallszahl vom Datenträger 1a über den antennenbasierten Übertragungskanal 15 an. In diesem Verfahren wird eine vom Datenträger 1a generierte Zufallszahl über den optischen Datenübertragungskanal 5, beispielsweise einer (Infrarot-/UV-) LED, an das Lesegerät 1 übertragen (Schritt 31: "response"). Eine weitere Möglochkeit besteht darin, die Zufallszahl als Barcode, Pixelcode, MRZ (machine readable zone) auf einem Display 4 auf dem kontaktlosen Datenträger 1a aus zu geben. Auch kann gleichzeitig über den antennenbasierten Datenübertragungskanal 15 eine Antwort gesendet werden, welche sich inhaltlich von den auf optischem Wege übertragenen kontaktlosen Daten unterscheidet, aber einem Timeout auf dem Übertragungskanal, also insbesondere beim Lesegerät, vorbeugt. Einerseits kann ein potentieller Angreifer keine inhaltlichen Rückschlüsse beim Mithören des antennenbasierten Übertragungskanals 15 ziehen, andererseits ist aber auch keine besondere Behandlung einzelner Applikationskommandos erforderlich, so dass die Software des Lesegeräts 1 nicht verändert werden muss. Es bietet sich beispielsweise an, den Code "90 00" (Kommando erfolgreich ausgeführt) zu senden. Um eventuelle Angreifer irrezuführen, können auch falsche Daten übermittelt werden.

Es ist ebenfalls denkbar, die Zufallszahl über den optischen Datenübertragungskanal anzufordern und über den antennenbasierten Datenübertragungskanal zu übertragen.

Der Authentifizierungsalgorithmus läuft anschließend nach dem bekannten Verfahren zur einseitigen oder gegenseitigen Authentifizierung ("external authenthicate", 32) ab. Wurde die Authentifizierung erfolgreich abgeschlossen, so kann die eigentliche Kommunikation 33 beginnen und der Datensatz 23 ausgelesen werden.

Das in Bezug auf Fig. 6 beschriebene Verfahren kann in Kombination oder aber unabhängig von dem zu Fig. 5 beschriebenen Verfahren angewendet werden.

Ein Vorteil der beschriebenen Verfahren besteht darin, dass durch die Verwendung zweier unterschiedlicher Datenübertragungskanäle - des optischen 5 sowie des antennenbasierten 15 - ein Verfälschen oder Austauschen der Daten erheblich erschwert wird. Es eignet sich daher insbesondere für den Austausch von sensiblen, wie z. B. personenbezogenen Daten. Eine einseitige Authentifizierung oder eine gegenseitige Authentifizierung werden verbessert durch den miteinander verbundenen Einsatz der beiden Datenübertragungskanäle.

Je nach Art der zu übertragenen Daten ist es aber auch denkbar, wahlweise nur einen Datenübertragungskanal zu verwenden. Der damit verbundene Verlust an Sicherheit ist in der Regel mit einem Zugewinn an Verarbeitungsgeschwindigkeit verbunden und kann bei Daten, wie sie beispielsweise für den Bereich der Logistik, des Warentransports und der Warenverwaltung benötigt werden, u.U. toleriert werden. Sollen mit Hilfe des gleichen Datenträgers 1a auch sensible Daten verarbeitet werden, kann hierfür zwingend vorgesehen sein, beide Datenübertragungskanäle beim Auslesen durch das Lesegerät zu nutzen. Die Umschaltung zwischen ein bzw. zwei Übertragungskanälen kann dabei nach Setzen eines Flags o.ä. automatisiert erfolgen.

Bei einem Lesegerät 1 handelt es sich um ein intelligentes Gerät, welches sowohl über antennenbasierte kontaktlose Lesemittel 2 wie auch über optische Lesemittel verfügt. In einer bevorzugten Ausführungsform ist das Lesegerät 1 als mobiles Endgerät, z.B. Mobiltelefon, PDA, Laptop o.ä. ausgebildet und weist eine Schnittstelle zur Kontaktloskommunikation, wie NFC (Near Field Communication) auf. Als optisches Kommunikationsmittel kann die in den meisten Geräten vorhandene IRDA-Schnittstelle eingesetzt werden. Als optisches Lesemittel kann eine Kamera vorgesehen sein. Vorzugsweise werden die optisch lesbaren Daten, wie z.B. die Seriennummer des Chips 3 auf dem Datenträger 1a in einer maschinenlesbaren Form dargestellt (Barcode, OCR-Daten). Ein derartiges Lesegerät 1 eignet sich besonders zur Kontrolle von Reisedokumenten durch Polizei oder Grenzschutzbeamte, wobei über eine eventuell zusätzlich vorhandene Onlineverbindung weitere Abfragen ausgeführt werden können.

Zur Erhöhung der Sicherheit kann vorgesehen sein, dass der Chip 3 des Datenträgers 1a zusätzlich eine Zufallszahl als Seriennummer generiert und über den antennenbasierten Datenübertragungskanal an das Lesegerät 1 überträgt. Die Verwendung derartiger Zufallsseriennummern wird beispielsweise in der ISO 14443 (Chapter 6.4.4, "UID contents and cascade levels") beschrieben. Die zur Abwicklung des Antikollisionsalgorithmus benötigte Seriennummer des Datenträgers 1a besteht dabei nicht wie üblich aus einer eindeutigen und unverwechselbaren Ziffer, sondern aus einer bei jeder Transaktion neu erzeugten Zufallszahl. Durch diese Maßnahme ist kein Rückschluß aus der verwendeten Seriennummer auf die Identität des Datenträgers mehr möglich. Ein eventueller (Replay-)Angriff durch Wiederholen einer einmal abgehörten Kommunikation zwischen Datenträger und Terminal kann somit besonders effektiv verhindert werden.

Auch die optisch lesbaren Daten können nicht-statisch auf dem Datenträger 1a verfügbar sein und z.B. mit Hilfe eines Displays o.ä. dynamisch verändert werden. Es lassen sich derart auch Einmal-Passwörter, Zufallsseriennummern etc. generieren und darstellen. Ferner ist auch eine beliebige Kombination aus den dynamisch generierten und entweder antennenbasiert oder optisch übertragenen Daten denkbar.

Gemäß der vorliegenden Erfindung weist ein kontaktloser Datenträger eine Antenne und einen Chip auf, wobei der Datenträger Mittel zur Übertragung von Daten über einen optischen Datenübertragungskanal und Mittel zur Übertragung von Daten über einen antennenbasierten Datenübertragungskanal aufweist. Auf dem Datenträger sind Daten angeordnet, die über den optischen Datenübertragungskanal und/oder den antennenbasierten Datenübertragungskanal an ein Lesegerät übertragbar sind.

## Patentansprüche

1. Kontaktloser Datenträger (1a) mit einer Antenne (2) und einem Chip (3), wobei der Chip (3) einen Speicher (21) mit mehreren Speicherbereichen (22, 24) umfasst,
wobei zumindest einer der Speicherbereiche (24) frei auslesbar ist und zumindest einer der Speicherbereiche (22) gegen ein unberechtigtes Auslesen mit Hilfe eines kryptographischen Schlüssels abgesichert ist und
wobei der abgesicherte Speicherbereich (22) mindestens einen ersten Datensatz (23) umfasst und der frei auslesbare Speicherbereich (24) mindestens einen zweiten Datensatz (25) umfasst, wobei der zweite Datensatz (25) dem ersten Datensatz (23) eindeutig zugeordnet ist und einen Komprimierungswert des ersten Datensatzes bildet,
wobei der erste Datensatz (23) und der zweite Datensatz (25) über einen antennenbasierten Datenübertragungskanal (15) an ein Lesegerät (1) übertragbar sind, wobei auf dem Datenträger (1a) weiterhin optisch lesbare Daten (20) angeordnet sind, welche über einen optischen Datenübertragungskanal an das Lesegerät (1) übertragbar sind, wobei
der Datenträger (1a) eingerichtet ist, dem Lesegerät (1) ein Auslesen des ersten Datensatzes (23) nach erfolgreicher Authentifizierung zwischen dem Datenträger (1a) und dem Lesegerät (1) mittels eines aus dem zweiten Datensatz (25) und den optisch lesbaren Daten (20) abgeleiteten kryptographischen Schlüssels zu ermöglichten.

2. Datenträger nach Anspruch 1, **dadurch gekennzeichnet, dass** die gespeicherten Datensätze als mit einem kryptografischen Schlüssel verschlüsselte Datensätze gespeichert sind.

3. Datenträger nach einem der Ansprüche 1 bis 2, **dadurch gekennzeichnet, dass** auf dem Datenträger ein lichtempfindliches Bauteil angeordnet ist, welches die Funktion des Chips in Abhängigkeit von der Helligkeit steuert.

4. Datenträger nach einem der Ansprüche 1 bis 3, **dadurch gekennzeichnet, dass** auf dem Datenträger ein Matrixcode aufgebracht ist.

5. Datenträger nach einem der Ansprüche 1 bis 3, **dadurch gekennzeichnet, dass** auf dem Datenträger ein Barcode aufgebracht ist.

6. Datenträger nach einem der vorhergehenden Ansprüche, **dadurch gekennzeichnet, dass** auf dem Datenträger ein Display zur Darstellung optischer Daten angeordnet ist.

7. Datenträger nach einem der vorhergehenden Ansprüche, **dadurch gekennzeichnet, dass** auf dem Datenträger ein Leuchtmittel zum Senden von optischen Signalen angeordnet ist.

8. Datenträger nach einem der vorhergehenden Ansprüche, **dadurch gekennzeichnet, dass** auf dem Datenträger ein optisches Empfangsmittel zum Empfangen von optischen Signalen angeordnet ist.

9. Datenträger nach einem der vorhergehenden Ansprüche, **dadurch gekennzeichnet, dass** auf dem Datenträger ein Lautsprecher angeordnet ist.

10. Datenträger nach einem der vorhergehenden Ansprüche, **dadurch gekennzeichnet, dass** auf dem Datenträger ein Vibrationsmelder angeordnet ist.

11. Verfahren zur sicheren Feststellung der willentlichen Benutzung eines kontaktlosen Datenträgers mit einer Antenne (2) und einem Chip (3),
wobei der Chip (3) einen Speicher (21) mit mehreren Speicherbereichen (22, 24) umfasst,
wobei zumindest einer der Speicherbereiche (24) frei auslesbar ist und zumindest einer der Speicherbereiche (22) gegen ein unberechtigtes Auslesen mit Hilfe eines kryptographischen Schlüssels abgesichert ist und
wobei der abgesicherte Speicherbereich (22) mindestens einen ersten Datensatz (23) umfasst und der frei auslesbare Speicherbereich (24) mindestens einen zweiten Datensatz (25) umfasst, wobei der zweite Datensatz (25) dem ersten Datensatz (23) eindeutig zugeordnet ist und einen Komprimierungswert des ersten Datensatzes bildet,
wobei der erste Datensatz (23) und der zweite Datensatz (25) über einen antennenbasierten Datenübertragunsgkanal (15) an ein Lesegerät (1) übertragbar sind,
wobei auf dem Datenträger (1a) weiterhin optisch lesbare Daten (20) angeordnet sind, welche über einen optischen Datenübertragungskanal (5) an das Lesegerät (1) übertragbar sind,
wobei zum Auslesen des ersten Datensatzes (23)
das Lesegerät (1) in einem ersten Verfahrensschritt den dem ersten Datensatz (23) eindeutig zugeordneten zweiten Datensatz (25) über den antennenbasierten Datenübertragunskanal (15) sowie die optisch lesbaren Daten (20) über den optischen Datenübertragungskanal (5) ausliest;
das Lesegerät (1) in einem zweiten Verfahrensschritt aus dem zweiten Datensatz (25) und den optisch lesbaren Daten (20) einen kryptographischen Schlüssel ableitet;
in einem dritten Verfahrensschritt eine Authentifizierung zwischen dem Datenträger (1a) und dem Lesegerät (1) mittels des abgeleiteten kryptographischen Schlüssel durchgeführt wird und;
in einem vierten Verfahrensschritt das Lesegerät (1) nach erfolgreicher Authentifizierung den ersten Datensatz (23) ausliest.

12. Verfahren nach Anspruch 11, **dadurch gekennzeichnet, dass** die Datenübertragung bidirektional erfolgt.

13. Verfahren nach einem der Ansprüche 11 bis 12, **dadurch gekennzeichnet, dass** eine zumindest einseitige Authentifizierung (27, 32) zwischen dem Lesegerät und dem Datenträger erfolgt.

14. Verfahren nach Anspruch 13, **dadurch gekennzeichnet, dass** die Authentifizierung (27,32) so erfolgt, dass sie die Verwendung beider Datenübertragungskanäle erfordert.

15. Verfahren nach einem der Ansprüche 11 bis 14, **dadurch gekennzeichnet, dass** in einem fünften Verfahrensschritt aus dem ersten Datensatz ein Komprimierungswert gebildet wird und in einem weiteren Verfahrensschritt ein Vergleich des derart gebildeten Komprimierungswertes mit dem zweiten Datensatz erfolgt.

16. Verfahren nach einem der Ansprüche 13 bis 15, **dadurch gekennzeichnet, dass** die Authentifizierung (27,32) nach Art eines challengeresponse-Verfahrens durchgeführt wird.

## Claims

1. A contactless data carrier (1a) having an antenna (2) and a chip (3),
wherein the chip (3) comprises a storage device (21) having several storage areas (22, 24),
wherein at least one of the storage areas (24) is freely readable and at least one of the storage areas (22) is protected with the aid of a cryptographic key against an unauthorized readout and
wherein the protected storage area (22) comprises at least a first data record (23) and the freely readable storage area (24) comprises at least a second data record (25), wherein the second data record (25) is clearly allocated to the first data record (23) and forms a compression value of the first data record,
wherein the first data record (23) and the second data record (25) are transmittable to a reading device (1) via an antenna-based data transmission channel (15),
wherein on the data carrier (1a), further, optically readable data (20) are disposed, which are transmittable to the reading device (1) via an optical data transmission channel,
wherein the data carrier (1a) is adapted to enable the reading device (1) to read out the first data record (23) after successful authentication between the data carrier (1a) and the reading device (1) by means of a cryptographic key derived from the second data record (25) and the optically readable data (20).

2. The data carrier according to claim 1, **characterized in that** the stored data records are stored as data records encrypted with a cryptographic key.

3. The data carrier according to any of claims 1 to 2, **characterized in that** on the data carrier there is disposed a light-sensitive component, which controls the function of the chip in dependence on the brightness.

4. The data carrier according to any of claims 1 to 3, **characterized in that** a matrix code is applied on the data carrier.

5. The data carrier according to any of claims 1 to 3, **characterized in that** a bar code is applied on the data carrier.

6. The data carrier according to any of the above claims, **characterized in that** a display for representing optical data is disposed on the data carrier.

7. The data carrier according to any of the above claims, **characterized in that** an illuminant for sending optical signals is disposed on the data carrier.

8. The data carrier according to any of the above claims, **characterized in that** an optical receiving means for receiving optical signals is disposed on the data carrier.

9. The data carrier according to any of the above claims, **characterized in that** a loudspeaker is disposed on the data carrier.

10. The data carrier according to any of the above claims, **characterized in that** a vibration detector is disposed on the data carrier.

11. A method for reliably determining the deliberate use of a contactless data carrier having an antenna (2) and a chip (3),
wherein the chip (3) comprises a storage device (21) having several storage areas (22, 24),
wherein at least one of the storage areas (24) is freely readable and at least one of the storage areas (22) is protected with the aid of a cryptographic key against an unauthorized readout and
wherein the protected storage area (22) comprises at least a first data record (23) and the freely readable storage area (24) comprises at least a second data record (25), wherein the second data record (25) is clearly allocated to the first data record (23) and forms a compression value of the first data record, wherein the first data record (23) and the second data record (25) are transmittable to a reading device (1) via an antenna-based data transmission channel (15),
wherein on the data carrier (1a), further, optically readable data (20) are disposed, which are transmittable to the reading device (1) via an optical data transmission channel (5),
wherein for reading out the first data record (23)
in a first procedure step the reading device (1) reads out the second data record (25), clearly allocated to the first data record (23), via the antenna-based data transmission channel (15) as well as the optically readable data (20) via the optical data transmission channel (5);
in a second procedure step the reading device (1) derives a cryptographic key from the second data record (25) and the optically readable data (20);
in a third procedure step an authentication is carried out between the data carrier (1a) and the reading device (1) by means of the derived cryptographic key and;
in a fourth procedure step after successful authentication the reading device (1) reads out the first data record (23).

12. The method according to claim 11, **characterized in that** the data transmission is effected in a bi-directional fashion.

13. The method according to any of claims 11 to 12, **characterized in that** an at least one-sided authentication (27, 32) is effected between the reading device and the data carrier.

14. The method according to claim 13, **characterized in that** the authentication (27, 32) is effected in such a way that it requires the use of the two data transmission channels.

15. The method according to any of claims 11 to 14, **characterized in that** in a fifth procedure step from the first data record a compression value is formed and in a further procedure step a comparison is effected between the such formed compression value and the second data record.

16. The method according to any of claims 13 to 15, **characterized in that** the authentication (27, 32) is carried out in the manner of a challenge-response method.

## Revendications

1. Support de données (1a) sans contact muni d'une antenne (2) et d'une puce (3),
cependant que la puce (3) comprend une mémoire (21) à plusieurs zones de mémoire (22, 24),
cependant qu'au moins une des zones de mémoire (24) est librement lisible et au moins une des zones de mémoire (22) est sécurisée, contre une lecture non autorisée, à l'aide d'une clé cryptographique et
cependant que la zone de mémoire (22) sécurisée comprend au moins un premier jeu de données (23) et la zone de mémoire (24) librement lisible comprend au moins un deuxième jeu de données (25), le deuxième jeu de données (25) étant affecté univoquement au premier jeu de données (23) et constituant une valeur de compression du premier jeu de données,
cependant que le premier jeu de données (23) et le deuxième jeu de données (25) sont, par l'intermédiaire d'un canal de transmission de données (15) basé sur antenne, transmissibles à un appareil de lecture (1),
cependant qu'en outre, sur le support de données (1 a), des données (20) optiquement lisibles sont agencées, lesquelles données sont transmissibles, par l'intermédiaire d'un canal optique de transmission de données, à l'appareil de lecture (1), cependant que
le support de données (1 a) est configuré pour permettre à l'appareil de lecture (1) une lecture du premier jeu de données (23) après authentification aboutie entre le support de données (1a) et l'appareil de lecture (1) au moyen d'une clé cryptographique dérivée du deuxième jeu de données (25) et des données (20) optiquement lisibles.

2. Support de données selon la revendication 1, **caractérisé en ce que** les jeux de données mémorisés sont mémorisés en tant que jeux de données cryptés avec une clé cryptographique.

3. Support de données selon une des revendications de 1 à 2, **caractérisé en ce que**, sur le support de données, un composant photosensible commandant la fonction de la puce en fonction de la luminosité est agencé.

4. Support de données selon une des revendications de 1 à 3, **caractérisé en ce que**, sur le support de données, un code matriciel est appliqué.

5. Support de données selon une des revendications de 1 à 3, **caractérisé en ce que**, sur le support de données, un code-barre est appliqué.

6. Support de données selon une des revendications précédentes, **caractérisé en ce que**, sur le support de données, un écran d'affichage pour la représentation de données optiques est agencé.

7. Support de données selon une des revendications précédentes, **caractérisé en ce que**, sur le support de données, un agent lumineux pour l'envoi de signaux optiques est agencé.

8. Support de données selon une des revendications précédentes, **caractérisé en ce que**, sur le support de données, un agent récepteur optique pour la réception de signaux optiques est agencé.

9. Support de données selon une des revendications précédentes, **caractérisé en ce que**, sur le support de données, un haut-parleur est agencé.

10. Support de données selon une des revendications précédentes, **caractérisé en ce que**, sur le support de données, un détecteur de vibrations est agencé.

11. Procédé de constatation sûre de l'utilisation volontaire d'un support de données sans contact muni d'une antenne (2) et d'une puce (3),
cependant que la puce (3) comprend une mémoire (21) à plusieurs zones de mémoire (22, 24),
cependant qu'au moins une des zones de mémoire (24) est librement lisible et au moins une des zones de mémoire (22) est sécurisée contre une lecture non autorisée à l'aide d'une clé cryptographique et
cependant que la zone de mémoire (22) sécurisée comprend au moins une premier jeu de données (23) et la zone de mémoire (24) librement lisible comprend au moins un deuxième jeu de données (25), le deuxième jeu de données (25) étant affecté univoquement au premier jeu de données (23) et constituant une valeur de compression du premier jeu de données, cependant que le premier jeu de données (23) et le deuxième jeu de données (25) sont, par l'intermédiaire d'un canal de transmission de données (15) basé sur antenne, transmissibles à un appareil de lecture (1),
cependant qu'en outre, sur le support de données (1 a), des données (20) optiquement lisibles sont agencées, lesquelles données sont transmissibles, par l'intermédiaire d'un canal optique de transmission de données (5), à l'appareil de lecture (1),
cependant que, pour la lecture du premier jeu de données (23),
l'appareil de lecture (1), lors d'une première étape du procédé, lit le deuxième jeu de données (25) affecté univoquement au premier jeu de données (23) par l'intermédiaire du canal de transmission de données (15) basé sur antenne ainsi que les données (20) optiquement lisibles par l'intermédiaire d'un canal optique de transmission de données (5);
l'appareil de lecture (1), lors d'une deuxième étape du procédé, dérive une clé cryptographique à partir du deuxième jeu de données (25) et des données (20) optiquement lisibles;
et que, lors d'une troisième étape du procédé, une authentification entre le support de données (1a) et l'appareil de lecture (1) est effectuée au moyen de la clé cryptographique dérivée et
lors d'une quatrième étape du procédé, l'appareil de lecture (1), après authentification aboutie, lit le premier jeu de données (23).

12. Procédé selon la revendication 11, **caractérisé en ce que** la transmission de données a lieu de manière bidirectionnelle.

13. Procédé selon une des revendications de 11 à 12, **caractérisé en ce qu'**une authentification au moins unilatérale (27, 32) entre l'appareil de lecture et le support de données a lieu.

14. Procédé selon la revendication 13, **caractérisé en ce que** l'authentification (27, 32) a lieu de telle façon qu'elle nécessite l'utilisation des deux canaux de transmission de données.

15. Procédé selon une des revendications de 11 à 14, **caractérisé en ce que**, lors d'une cinquième étape du procédé, à partir du premier jeu de données, une valeur de compression est constituée et **en ce que**, lors d'une étape ultérieure du procédé, une comparaison entre la valeur de compression ainsi constituée et le deuxième jeu de données a lieu.

16. Procédé selon une des revendications de 13 à 15, **caractérisé en ce que** l'authentification (27, 32) est effectuée à la manière d'un procédé challenge /response.
